# DEMANDE DE BREVET EUROPEEN

(11) **EP 1 870 842 A1**
(43) Date de publication de la demande: **26.12.2007**
(21) Numéro de dépôt: 07011758.5
(22) Date de dépôt: 15.06.2007
(51) Int. Cl.: G06N 5/04, G06F 9/45

(54) **Procédé de création de contenus multimédia pour terminaux mobiles, produit programme d'ordinateur pour la mise en oeuvre d' un tel procédé**

(30) Priorité: 20.06.2006 FR 0652172
(71) Demandeur: Alcatel Lucent, 75008 Paris (FR)
(72) Inventeur: Marilly, Emmanuel, 91240 Saint-Michel-Sur-Orge (FR); Delegue, Gérard, 94230 Cachan (FR); Martinot, Olivier, 91210 Draveil (FR); Squedin, Sylvain, 91070 Bondoufle (FR); Baynaud, Erwan, 77380 Combs-La-Ville (FR)
(74) Mandataire: Hedarchet, Stéphane

(57) **Abrégé**

Procédé de création d'un service multimédia, ce procédé comprenant :
- une étape de description générique, indépendante du format multimédia, des chartes graphiques employées pour le service,
- une étape de description générique, indépendante du format multimédia, des services élémentaires du service ;
- une étape de fusion de la description générique des chartes graphique et de la description générique des services élémentaires, pour former une description générique du service ;
- une étape de choix d'au moins un langage cible ;
- une étape de traduction de la description générique du service dans le langage cible choisi.

## Description

L'invention concerne la création de contenus en format de media enrichi (*rich media format*)*.* L'invention trouve une application pour le multimédia interactif, en particulier télévision interactive, sur terminaux mobiles, mais aussi TNT, IPTV.

Par « multimédia », on désigne l'utilisation interactive et simultanée de plusieurs modes de représentation de l'information (textes, images fixes ou animées, sons).

Par « interactif », on désigne la possibilité d'actions réciproques en mode dialogué. A titre d'exemple, l'utilisateur peut choisir des réponses, suivre son propre chemin dans une arborescence, modifier le déroulement d'un programme.

Par « télévision interactive » (ITV *Interactive Television*) on désigne ici toute technologie permettant une communication à double sens entre spectateurs et fournisseur de services (tel que *broadcaster,* câblodistributeur), notamment pour le divertissement, l'information, l'éducation, le commerce. Les services que doivent offrir une télévsion interactive sont par exemple VoD (*Video on Demand*)*,* podcast, PVR (*Personal Video Recording*)*,* ESG (*Electronic Service Guide*)*,* vote, quiz, achat.

Le multimédia a connu un succès sur le Web, notamment depuis le lancement en 1995 du langage de programmation Java qui a permis de créer des applications autonomes et de doter les documents html (*Hyper Text Mark-Up Language*) de nouvelles fonctionnalités : animations interactives, applications intégrées, modèles 3D. Ce langage orienté objet comprend des éléments spécialement conçus pour la création d'applications multimédia. Pour l'interactivité, des connexions activables à la demande (hyperliens) relient les données pour la navigation Web.

Internet, téléphonie fixe et mobile, radio et télévision sont aujourd'hui proposés aux ordinateurs par un seul modem « multi-fonctions ». La convergence de l'audiovisuel, de l'informatique et des télécommunications est une réalité pour les détenteurs de ces modems.

Le multimédia interactif sur terminaux mobiles suscite actuellement un grand intérêt.

Par le passé, des protocoles d'accès Internet spécifiques aux terminaux mobiles tel que PDA (*Personal Digital Assistant*) ou téléphone portable ont été proposés, par exemple Wap (*Wireless Application Protocole).*

Pour la télévision sur terminal mobile, plusieurs standards sont proposés aujourd'hui.

Un premier standard est le MPEG-4 BIFS.

Le standard de l'ISO/IEC MPEG4 (*Moving Pictures and associated audio information coding Expert Group 4*) concerne toutes les technologies multimédia comme le téléchargement ou la lecture en transit (*streaming*) sur Internet, le multimédia sur terminal mobile, la radio numérique, les jeux vidéos, la télévision et les supports hautes définition (TVHD). Ce standard MPEG4 doit permettre la convergence du Web et de la télévision en intégrant des contenus provenant de ces deux médias.. Il offre en plus la possibilité de décrire des scènes interactives 2D avec MHEG (*Multimedia and Hymermedia Expert Group*)*.* MPEG4 permet aussi de définir des scènes 3D via le langage de création de scènes Web VRML (*Virtual Reality Modelling Language*) et de les gérer sur le format binaire de description de scène BIFS (*Binary Format for Scene*)*,* la description étant sur le Web, le texte descriptif qui est associé à une page et affiché - habituellement le titre de la page et son URL - lorsqu'un visiteur fait une demande au travers d'un moteur de recherche ou un répertoire. Dans le standard MPEG4, l'interface de programmation EAI (*External Authoring Interface*) doit permettre de contrôler une scène VRML depuis une application externe Java. Dans le standard MPEG4, une description textuelle des modules est prévue sous le nom de OCI (*Object Content Information*)*,* la gestion du réseau et des terminaux se faisant avec l'interface générique de connexion DMIF (*Delivery Multimedia Framework*)*.*

Dans le domaine technique des services mobiles interactifs, d'autres standards que MPEG4-BIFS sont proposés : MPEG-LASeR (*Lightweight Application Scene Representation,* mis en avant par Streamezzo), SVG (*Scalable Vector Graphics,* mis en avant par le W3C *World Wide Web Consortium*)*,* MORE (*Mobile Open Rich-Media Environment,* mis en avant par la société Nokia).

Pour la diffusion de la télévision sur terminal mobile tel que téléphone UMTS (*Universal Mobile Telecommunications System*)*,* une cellule supporte un petit nombre de sessions multimédia simultanées hait débit, typiquement 256kbit/s. Cette capacité sera sans doute améliorée par l'arrivée de l'HSDPA *(High Speed Downlink Packet Access)* ou du 3GLTE *(3GPP Long Term Evolution).* La solution « broadcast » ne présente pas cette limitation, trois technologies de diffusion de télévision vers les terminaux mobiles étant possibles :
- le MBMS *(Multimédia Broadcast*/*Multicast Service),* extension de l'UMTS ;
- les réseaux digitaux terrestres tels que DVB-H *(Digital Video Broadcast transmission to Handhled terminals),* T-DMB *(Terrestrial Digital Multimedia Broadcasting),* Media-Flo *(Media Forward Link Only)* et le réseau japonais ISDB-T ;
- les réseaux hybrides satellites/terrestres tels que S-DMB en Corée, MobaHO ! au Japon ou DVB-H adapté à la bande S tel que développé par la demanderesse, permettant une capacité de 5 à 11 Mbits/s (8 MHz), et 20 à 30 canaux, à comparer aux 3 canaux à 256 kbits/s du MBMS.

L'un des inconvénients de l'approche « broadcast » est que chaque créateur de contenu va fournir au diffuseur un contenu obtenu à l'aide d'outils de création pour multimédia *(Authoring Tools)* qui lui est propre.

Ces outils de création permettent flexibilité et facilité dans la création et la délivrance de services, réduisant les coûts de conception et les temps nécessaires pour délivrer un produit sur le marché.

Les outils de création doivent prendre en compte les environnements spécifiques et les contextes de développement et de mise en place dans les réseaux *(deployement).*

Plus précisément, la mise en oeuvre d'outils de création dédiés aux environnements des terminaux mobiles et employés pour créer et délivrer des services mobiles interactifs doit prendre en compte les deux difficultés suivantes :
- dépendance de ces outils de création vis-à-vis des formats multimédia ou format de média enrichi (rich media formats). Les formats multimédia tels que MPEG4-BIFS (Moving Pictures and associated audio information coding Expert Group 4 Binary Format for Scene), MPEG4-LASEeR, VRML (Virtual Reality Modelling Language), SVG (Scalable Vector Graphics) offrent chacun un jeu de descriptions audiovisuelles et différentes caractéristiques graphiques. Le modèle décrivant l'application est fondé sur un langage associé à un format multimédia. A titre d'exemple de ces différences, le VRML est un modèle dit « download and play », le contenu étant téléchargé entièrement avant que la scène ne démarre, un contenu MPEG-4 pouvant être en modèle lecture en transit (streaming). Le choix d'un autre langage implique une traduction du modèle source dans le modèle cible. Toutefois, cette traduction est parfois difficile par le fait que quelques caractéristiques d'un langage de média enrichi ne sont pas supportées par un autre langage. Le rendu (rendering) et le comportement de l'application traduite peuvent être affectés par la traduction. Il en résulte que le choix de l'outil de création gouverne le choix du format multimédia. Par exemple, l'outil de création de Streamezzo est dédié au MPEG4 LASeR et ne supporte pas un autre format multimédia. Dans le cas du MPEG4 -BIFS, la société Envivo propose un outil de création supportant uniquement le format BIFS (encodeurs MPEG-4 H.263/H264), De sorte que si l'on veut créer un service mobile interactif supportant à la fois le format MPEG4-BIFS et MPEG4-LASeR, il faut employer deux outils de création ;
- apparence graphique : il n'existe pas de méthode explicite pour réutiliser dans un deuxième service une apparence graphique définie pour un premier service. Il existe un besoin important d'une librairie d'apparences graphiques pour l'emploi de l'une de ces apparences au service défini.

Un objet de l'invention est de fournir une solution au problème de dépendance des outils de création vis-à-vis du format multimédia et permettant le réemploi d'une apparence graphique pour la création de services.

A ces fins, l'invention se rapporte, selon un premier aspect, à un procédé de création d'un service multimédia, ce procédé comprenant :
- une étape de description générique, indépendante du format multimédia, des chartes graphiques employées pour le service,
- une étape de description générique, indépendante du format multimédia, des services élémentaires du service ;
- une étape de fusion de la description générique des chartes graphiques et de la description générique des services élémentaires, pour former une description générique du service ;
- une étape de choix d'au moins un langage cible ;
- une étape de traduction de la description générique du service dans le langage cible choisi.

Le procédé présente, selon diverses réalisations, les caractères suivants, le cas échéant combinés :
- l'étape de traduction de la description générique comprend une analyse syntaxique et une analyse d'inférence ;
- pour sa description, un service élémentaire est considéré comme formé de trois composants fonctionnels : le composant du rendu à l'utilisateur final, le composant logique du service interne, où est définit la partie logique du service ; le composant du service logique externe, supportant l'interactivité à un serveur distant ;
- lorsque le service est traduit dans le format enrichi cible, une compilation du service est effectuée, avant déploiement du service.

L'invention se rapporte, selon un deuxième aspect, à un produit programme d'ordinateur pour la création de service multimédia, ce produit comprenant un outil de création de service pourvu d'une part, de moyens de fusion entre une description de charte graphique du service et une description de services élémentaires, pour définir une description générique du service, indépendante du format multimédia ; ce produit programme d'ordinateur étant pourvu d'autre part, de moyens de traduction de cette description générique de service, dans un langage cible.

Avantageusement, les moyens de traduction comprennent un moyen d'analyse syntaxique associé à un moteur d'inférence.

Avantageusement, le logiciel d'analyse syntaxique comprend, en modules, un moteur d'inférence et un moyen de reconnaissance de format multimédia.

Dans une mise en oeuvre avantageuse, le module moteur d'inférence est configurable et définit le service logique de création d'inférence. Ainsi, par exemple si une fonctionnalité dans un service créé n'est pas supportée par le format mutlimédia cible, le créateur de service peut définir comment la traduction sera effectuée pour rendre ce service tout en évitant cette faiblesse de ce format multimédia cible.

D'autres objets et avantages de l'invention apparaîtront au cours de la description suivante de modes de réalisations, description qui va être effectuée en se référant aux dessins annexés dans lesquels :

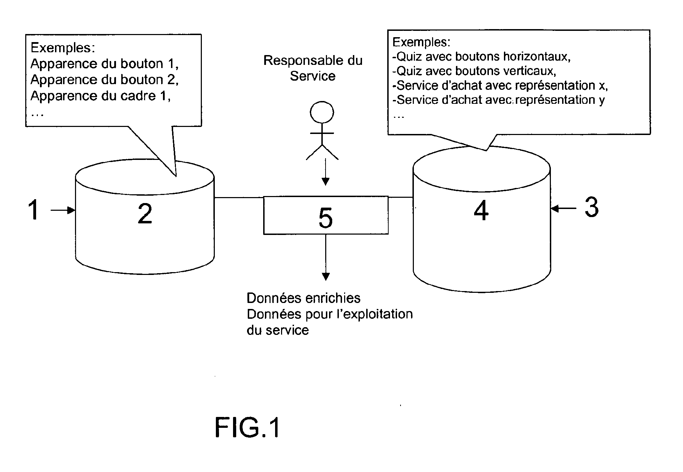

- la figure 1 est une vue schématique de la mise en oeuvre de l'invention ;

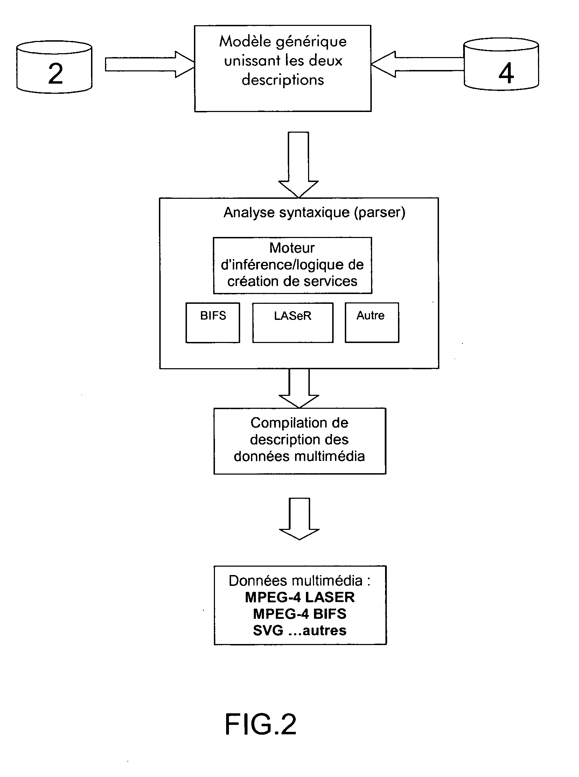

- la figure 2 est une vue schématique plus détaillée que celle la figure 1 ;
- la figure 3 est une vue schématique d'une mise en oeuvre particulière de l'invention.

Un service en format multimédia est composé d'un ou plusieurs services élémentaires tels que sondage, votes, quiz, achat. Une charte graphique définit l'apparence de ce service qui est aussi lié à un composant de configuration de serveur qui définit la configuration côté serveur.

Lors de la création d'un service, un créateur de graphique **1** effectue une description des chartes graphiques employées pour le service, et ces descriptions sont enregistrées dans une base de données de chartes graphiques **2.** Les apparences d'une collection d'éléments graphiques d'interfaces *(widgets)* sont définis, par exemple style de boutons, zone combinée *(combo box),* barre de menu, barre de défilement, boîtes de texte, style du texte, style de ligne.

Parallèlement, un créateur de services élémentaires **3** effectue une description des services élémentaires du service *(basic bricks),* et ces descriptions sont enregistrées dans une base de données de descriptions de services élémentaires **4.**

Pour sa description, un service élémentaire est considéré comme formé de trois composants fonctionnels :
- le composant du rendu à l'utilisateur final, par exemple éléments abrégés d'une interface graphique de l'utilisateur final GUI (Graphical User Interface) ;
- le composant logique du service interne, où est définit la partie logique du service. Par exemple, détection d'un évènement (bouton poussé) d'un utilisateur final et exécution d'une action ;
- le composant du service logique externe, supportant l'interactivité à un serveur distant : partie client pour envoi de requête interactive à partir du terminal de l'utilisateur final, côté serveur pour la gestion de ces requêtes interactives.

Un outil de création **5** réalise, à partir des données extraites des bases de données **2, 4,** une description générique du service **6.**

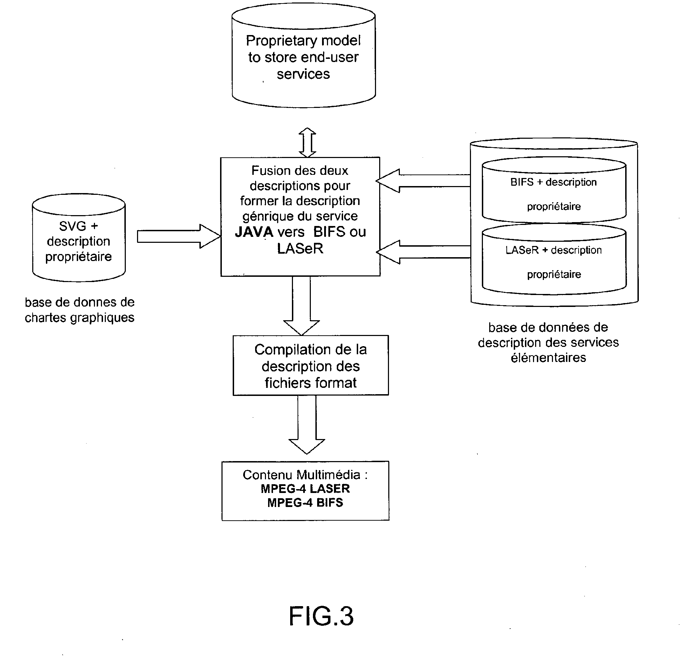

Cette description est dite générique dans la mesure où elle est indépendante du format multimédia. Les descriptions génériques pour la charte graphique ou les services peuvent être par exemple propriétaires ou bien encore être définies dans un format multimédia existant. A titre d'exemple, dans le mode de mise en oeuvre de la figure 3, la description des chartes graphiques est spécifiée dans le langage SVG et les descriptions de service élémentaires sont spécifiées avec BIFS et avec LASeR.

La description générique du service est envoyée au logiciel d'analyse syntaxique *(parser)* **7** pour la traduction de cette description générique du service dans le format multimédia requis.

Le logiciel d'analyse syntaxique **7** est associé à un moteur d'inférence **8** *(rule engine)* et permet la traduction d'une description générique de service dans un format multimédia spécifique, par exemple MPEG-4 BIFS, MPEG-4 LASeR, SVG, MORE.

Cet ensemble logiciel d'analyse syntaxique 7/moteur d'inférence **8** *(parser*/*rule engine)* pour la traduction de la description générique du service prend en compte le contexte de développement et déploiement *(deployement) :* par exemple :
- le format multimédia est-il supporté par l'opérateur réseau et les équipements des utilisateurs finaux,
- le format multimédia supporte-t-il le service créé.

Avantageusement, une fonction d'importation « convertit » un service définit dans un format spécifique en une description générique en utilisant le moteur d'inférence 8 pour l'adaptation.

Dans une mise en oeuvre, le logiciel d'analyse syntaxique 7 comprend, en modules :
- un moteur d'inférence 8 (rule engine)
- et un logiciel de reconnaissance de format multimédia (rich media format parser).

Le module moteur d'inférence **8** est configurable et définit le service logique de création d'inférence. Par exemple si une fonctionnalité dans un service créé n'est pas supportée par le format mutlimédia cible, le créateur de service peut définir comment la traduction sera effectuée pour rendre ce service tout en évitant cette faiblesse de ce format multimédia cible.

Le module reconnaissance de format prend également en compte le contexte de déploiement (par exemple le format est supporté par le réseau et les équipements des utilisateurs).

Le module reconnaissance de format est avantageusement modulaire. Par exemple pour chaque format, un sous module de format est définit permettant la traduction. Si un nouveau format multimédia apparaît sur le marché, la reconnaissance de format peut être adaptée pour intégrer un sous module dédié à ce nouveau format enrichi.

Lorsque le service est traduit dans le format enrichi cible, une compilation **9** du service est effectuée, avant déploiement **10** sur le réseau de l'opérateur.

De sorte à éviter la recréation de services existants et déployés, l'outil de création de service multimédia supporte une fonction importante de conversion d'un service définit dans un format multimédia dans le modèle générique.

Le créateur de service aura la possibilité d'insérer sa propre règle de traduction de sorte à adapter la conversion.

La mise en oeuvre de l'invention offre de nombreux avantages :
- éviter les conversions entre les formats multimédia tels que BIFS ou LASeR ;
- les services sont spécifiés indépendamment des formats multimédia, et peuvent être traduits dans tout format ;
- après la spécification des services, les outils de création vont proposer de sélectionner le format multimédia cible ;
- les services délivrés aux utilisateurs finaux ont, autant que possible, la même indépendance vis-à-vis de l'encodage du format multimédia ;
- le même service peut être définit dans plusieurs encodages de média enrichis selon l'opérateur réseau et l'équipement de l'utilisateur final ;
- l'outil de création peut être mis à jour pour supporter un nouveau format multimédia ;
- il est possible d'importer les services existants déjà.

La mise en oeuvre de l'invention est ainsi très avantageuse pour les contenus et services des fournisseurs et opérateurs (telco et broadcasting) qui ne veulent pas définir un service utilisant plusieurs compétences en matière d'outils et de format enrichis.

### Nomenclature

- **1**: créateur de graphique
- **2**: base de données de chartes graphiques
- **3**: créateur de services élémentaires
- **4**: base de données de descriptions de services élémentaires
- **5**: outil de création
- **6**: description générique du service
- **7**: logiciel d'analyse syntaxique
- **8**: moteur d'inférence
- **9**: compilation
- **10**: déploiement.

## Revendications

1. Procédé de création d'un service multimédia, ce procédé comprenant :
- une étape de description générique des éléments graphique d'interface employés pour le service, cette description étant spécifiée dans un premier langage tel que SVG ;
- une étape d'enregistrement de ces descriptions dans une base de données de chartes graphiques (2) ;
- une étape de description générique des services élémentaires du service tels que sondage, votes, quiz, achat, cette description étant spécifiée dans un deuxième language tel que BIFS ou LASeR, sous la forme de trois composants fonctionnels : composant du rendu à l'utilisateur final tel qu'éléments abrégés d'une interface graphique ; composant logique du service interne ; composant logique du service externe supportant l'interactivité à un serveur distant ;
- une étape d'enregistrement de ces descriptions dans une base de données de description de services élémentaires (4) :
- une étape de fusion de la description générique des éléments graphiques d'interface et de la description générique des services élémentaires, pour former une description générique du service ;
- une étape de choix d'au moins un format de média enrichi cible tel que MPEG-4 BIFS, MPEG-4 LASeR, SVG, MORE ;
- une étape de traduction, par un logiciel d'analyse syntaxique (7) associé à un moteur d'inférence (8), de la description générique du service dans le format de média enrichi choisi.

2. Procédé de création de service selon la revendication 1, **caractérisé en ce que**, lorsque le service est traduit dans le format enrichi cible, une compilation (9) du service est effectuée, avant le déploiement (10) du service sur le réseau de l'opérateur.

3. Procédé de création de service selon la revendication 1 ou 2, **caractérisé en ce que** pour sa description, un service élémentaire est considéré comme formé de trois composants fonctionnels :
- le composant du rendu à l'utilisateur final,
- le composant logique du service interne, où est définit la partie logique du service ;
- le composant du service logique externe, supportant l'interactivité à un serveur distant.

4. Procédé de création de service selon l'une quelconque des revendications précédentes, **caractérisé en ce que**, lorsque le service est traduit dans le format enrichi cible, une compilation (9) du service est effectuée, avant déploiement (10) du service.

5. Produit programme d'ordinateur pour la création de service multimédia, ce produit comprenant un outil de création de service (5) pourvu :
- de moyens de fusion entre une description de charte graphique du service et une description de service élémentaires, pour définir une description générique du service, indépendante du format multimédia ;
- de moyens de traduction de cette description générique de service, dans un langage cible.

6. Produit programme d'ordinateur selon la revendication 5, **caractérisé en ce que** les moyens de traduction comprennent un moyen d'analyse syntaxique (7) associé à un moteur d'inférence (8).

7. Produit programme d'ordinateur selon l'une quelconque des revendications 5 ou 6, **caractérisé en ce que** le logiciel d'analyse syntaxique (7) comprend, en modules, un moteur d'inférence (8) et un moyen de reconnaissance de format multimédia.

8. Produit programme d'ordinateur selon la revendication 7, **caractérisé en ce que** le module moteur d'inférence (8) est configurable et définit le service logique de création d'inférence.
